Europäisches Patentamt

European Patent Office

Office européen des brevets

(19)

(11) Numéro de publication : **0 067 082**
**B1**

(12)

# FASCICULE DE BREVET EUROPÉEN

(45) Date de publication du fascicule du brevet :
**28.08.85**

(21) Numéro de dépôt : **82400820.5**

(22) Date de dépôt : **04.05.82**

(51) Int. Cl.⁴ : **H 01 S 3/101**// H01S3/10, G02F1/35

(54) **Source cohérente de rayonnement générant un faisceau de direction de propagation réglable.**

(30) Priorité : **22.05.81 FR 8110248**

(43) Date de publication de la demande :
**15.12.82 Bulletin 82/50**

(45) Mention de la délivrance du brevet :
**28.08.85 Bulletin 85/35**

(84) Etats contractants désignés :
**DE GB NL SE**

(56) Documents cités :
**DE-A- 2 630 538**
**US-A- 3 612 659**
**US-A- 3 643 178**
**US-A- 3 790 252**
**US-A- 3 804 490**

(73) Titulaire : **THOMSON-CSF**
**173, Boulevard Haussmann**
**F-75379 Paris Cedex 08 (FR)**

(72) Inventeur : **Huignard, Jean-Pierre**
**THOMSON-CSF SCPI 173, bld Haussmann**
**F-75379 Paris Cedex 08 (FR)**
Inventeur : **Malard, Marcel**
**THOMSON-CSF SCPI 173, bld Haussmann**
**F-75379 Paris Cedex 08 (FR)**

(74) Mandataire : **Lepercque, Jean et al**
**THOMSON-CSF SCPI 173, bld Haussmann**
**F-75379 Paris Cedex 08 (FR)**

Jouve, 18, rue St-Denis, 75001 Paris, France

## Description

La présente invention se rapporte à une source cohérente de rayonnement générant un faisceau de direction de propagation réglable.

Un grand nombre d'applications du laser nécessitent que l'on puisse changer rapidement la direction du faisceau. On peut citer notamment les mémoires optiques, la photo-composition, la télévision sur grand écran. Les déflecteurs les plus anciens, et qui sont encore très souvent employés, sont les miroirs tournants ou vibrants. Cependant, d'autres dispositifs sans éléments mobiles ont été proposés. Ce sont notamment les déflecteurs acoustiques et électro-optiques.

Si $\alpha_m$ est l'angle maximum de déflexion et $\Delta\alpha$ l'angle entre deux directions séparables, on peut caractériser géométriquement un déflecteur par le nombre N de directions distinctes que l'on peut imprimer au faisceau. On a $N = \alpha_m/\Delta\alpha$. Dans tous les cas, $\Delta\alpha$ est limité par la diffraction correspondant à l'ouverture du faisceau.

En ce qui concerne le mode de fonctionnement, on distingue les déflexions séquentielle et aléatoire. Le premier mode qui correspond à un balayage angulaire continu, peut être caractérisé par le nombre de positions balayées par seconde. Par exemple, une image de télévision comportant 625 lignes avec 25 images par seconde, exige le balayage successif de $1,3 \times 10^7$ points par seconde. La déflexion aléatoire nécessaire par exemple pour accéder à une mémoire optique est plutôt caractérisée par le temps moyen d'accès à une direction ou position déterminée.

Si on considère un milieu photosensible électrooptique, l'interférence de deux faisceaux incidents dans ce milieu assure la génération d'un réseau de strates de pas et d'orientation convenable pour défléchir le faisceau laser. Cette interférence se produit dans un milieu à trois dimensions. Les caractéristiques physiques de ce milieu et en particulier l'indice de réfraction, sont modulés spatialement par un réseau de franges dues à l'interférence de ces deux faisceaux incidents. Du fait de cette modulation spatiale qui induit par gradient un réseau de strates, tout faisceau incident peut être ainsi diffracté dans une direction choisie. Les deux faisceaux d'inscription sont issus d'une même source qui peut être un laser Hélium-Cadmium, par exemple, après traversée d'un séparateur de faisceau.

Il est aussi connu par le document US-A-3 804 490 de réaliser une source cohérente de rayonnement produisant un faisceau de direction de propagation réglable comprenant une cavité laser entre deux miroirs sphériques dont l'un a un coefficient de transmission non nul. Un milieu amplificateur est situé sur le parcours de l'onde d'oscillation qui se propage entre ces deux miroirs. Un milieu d'interaction constitué par un modulateur acousto-optique, situé à l'extérieur de cette cavité, permet alors de défléchir le faisceau sortant de la cavité en réponse à la modulation du signal qui lui est appliqué.

Le dispositif proposé par l'invention permet la déflexion suivant deux axes de coordonnées orthogonaux X-Y d'un faisceau laser par insertion dans la cavité du laser de ce milieu d'interaction. Ce milieu sert de support à un réseau photoinduit dont le pas et l'orientation convenable des strates dévie le faisceau à l'intérieur de la cavité ; un modulateur optique commandable en X-Y, permettant d'initialiser l'effet laser dans la direction choisie.

Le dispositif de l'invention présente les avantages suivants :

— il assure la déflexion X-Y du faisceau laser dans une direction quelconque par des moyens non mécaniques ; le temps d'adressage et le nombre de points étant des paramètres totalement indépendants ;

— le milieu non-linéaire est disposé dans la cavité : il fonctionne donc dans les conditions optimales puisque la densité de puissance dans la cavité laser est élevée ;

— le milieu laser lui-même fonctionne de façon monomode puisque la déflexion angulaire du faisceau par le réseau de diffraction est compensée lors d'un aller et retour de la surface d'onde d'oscillation dans la cavité laser.

L'invention a pour objet une source cohérente de rayonnement produisant un faisceau de direction de propagation réglable telle que définie dans le préambule de la revendication 1.

Elle se distingue en ce que le milieu d'interaction est un milieu d'interaction non linéaire à variation d'indice photoinduite recevant une onde signal sous une incidence déterminée ; ladite incidence permettant de déterminer l'orientation du faisceau en ce que les centres de courbure de ces deux miroirs sont confondus et situés à l'intérieur de ce milieu d'interaction et en ce que des moyens de modulation de la direction de l'onde signal sont disposés sur le parcours de l'onde signal pour permettre d'initialiser l'oscillation par effet laser pour une certaine orientation du faisceau.

L'invention sera mieux comprise au moyen de la description qui suit et des figures annexées parmi lesquelles :

la figure 1  illustre le dispositif selon l'invention ;

les figures 2 à 5  illustrent des aspects particuliers du dispositif selon l'invention ;

la figure 6  illustre une variante du dispositif suivant l'invention.

De même qu'un oscillateur électrique est essentiellement constitué d'un amplificateur et d'un circuit résonnant, l'oscillateur lumineux comporte un milieu amplificateur de la lumière, et un ensemble de miroirs constituant ce que l'on appelle le « résonateur » ou, par analogie avec les oscillateurs hyperfréquence, la « cavité » du laser. Une onde d'oscillation se propage donc à l'intérieur de cette cavité.

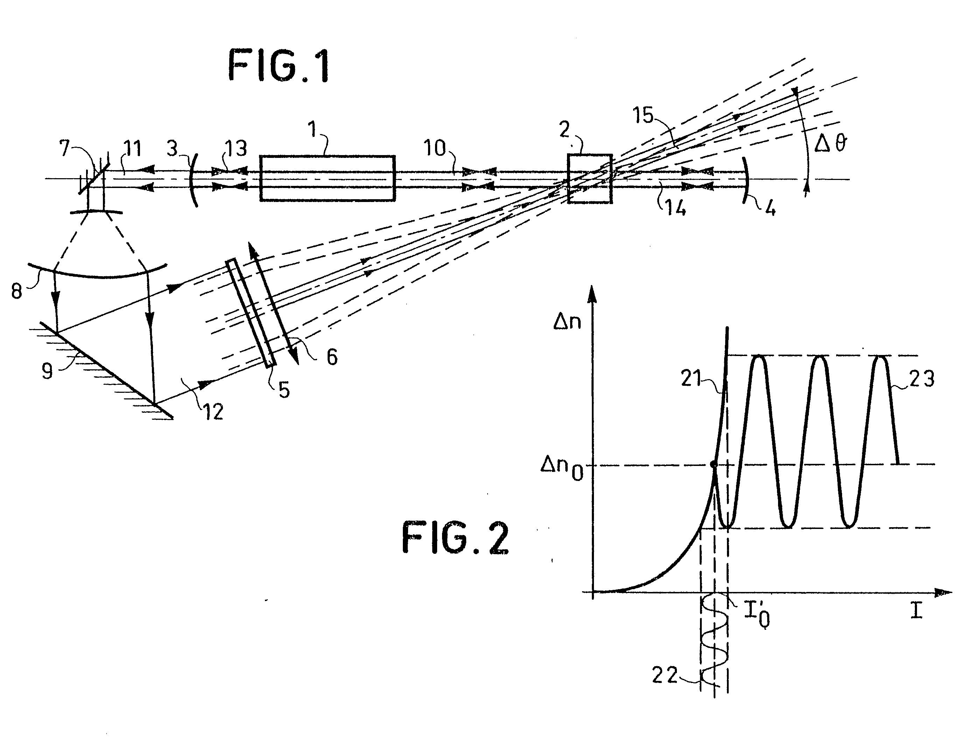

Dans le dispositif de l'invention représenté à la figure 1, on considère une cavité laser se composant des éléments suivants :

— un milieu amplificateur 1 qui est un solide, un liquide ou un gaz ;

— deux miroirs 3 et 4 à coefficient de réflexion élevés, ces miroirs 3 et 4 étant des miroirs sphériques de centres de courbure confondus ;

— un milieu non linéaire 2 placé à l'intérieur de la cavité contenant le centre de courbure de ces miroirs ; ce milieu non linéaire jouant le rôle d'un déflecteur.

L'effet laser dans la direction choisie est initialisé par un modulateur qui peut être par exemple électro-optique 5 à accès matriciel X-Y ; l'action simultanée de tensions $V_X$, $V_Y$ provoquant l'ouverture d'une fenêtre transparente de coordonnées X-Y dans le plan d'onde incident. Un objectif 6 permet à l'un quelconque des pinceaux élémentaires de passer par le centre de courbure de ces miroirs 3 et 4. Ce faisceau élémentaire de faible énergie permet d'initialiser l'effet laser dans la cavité en choisissant l'angle, de déflection $\Delta\alpha$ du faisceau de sortie par rapport à l'axe optique de la cavité.

Il existe une faible quantité d'énergie quittant la cavité à travers le miroir 3. Cette énergie est utilisée pour générer l'onde signal. Le faisceau 11 est ainsi réfléchi par le miroir 7, et par le miroir 9 après traversée d'un élargisseur de faisceau 8. Il illumine alors le modulateur en X-Y 5.

L'onde d'oscillation se propage en ligne droite (13, 10, 14) entre les deux miroirs 3 et 4.

Le milieu 2 joue le rôle d'un miroir actif et prélève un peu d'énergie sur cette onde d'oscillation. On obtient ainsi un faisceau défléchi 15 qui constitue le faisceau de sortie.

Les pertes hors cavité sont compensées par le gain du milieu amplificateur 1. Ce milieu 1 étant suffisamment non linéaire pour avoir un gain important.

Sur cette figure 1, on considère des pinceaux de rayons parallèles à la sortie du modulateur 5, ce qui n'est pas tout-à-fait exact ; mais en première approximation, ceci est vrai. La répartition d'un pinceau lumineux issu d'un laser est une fonction gaussienne, mais la lentille 6 permet de compenser les divergences des faisceaux.

Le milieu de déflection 2 met en œuvre les propriétés de certains milieux optiques, dits d'interaction non linéaire, dans lesquels une faible variation d'illumination a pour conséquence une variation importante d'indice de réfraction.

Cette propriété s'applique notamment au cas où des franges d'interférence sont formées dans le milieu par deux faisceaux cohérents arrivant sur ce milieu avec des incidences différentes. Ces franges d'interférence se traduisent dans le volume du milieu optique par des strates d'illumination modulée qui génèrent, après un temps d'inscription $\tau$, des strates d'indice variable, sur lesquels les faisceaux sont en partie diffractés en respect avec la loi de Bragg.

Si on appelle ces faisceaux cohérents respectivement faisceau objet et faisceau de référence, une fraction du faisceau de référence est diffractée selon la trajectoire du faisceau objet, conformément à la loi de Bragg.

Plus l'interaction du milieu est efficace, c'est-à-dire, plus le taux de modulation des strates d'indice est élevé, plus la fraction diffractée du faisceau de référence est élevée.

Selon la nature des matériaux constituant le milieu optique d'interaction, la non-linéarité de la dépendance entre le taux de modulation des strates d'indice et le taux de modulation de l'illumination à l'entrée du milieu a deux origines possibles :

Cette non-linéarité est directe, c'est-à-dire que l'indice du matériau, porté en ordonnée, varie non linéairement avec l'illumination, portée en abscisse, selon une courbe 21 représentée à la figure 2. En conséquence, à une faible modulation 22 d'illumination autour de la valeur $I_o$, correspond une forte modulation 23 de l'indice autour de la valeur $\Delta n_o$. C'est le cas des matériaux tels que les semi-conducteurs Si, CdTe, HgCdTe, CdS, InSb. Il y a lieu d'utiliser ces matériaux avec des épaisseurs pas trop importantes, 1 à 2 mm, pour ne pas perdre trop de rayonnement par absorption.

Cette non-linéarité est indirecte et est due au phénomène de couplage d'ondes à l'intérieur du milieu d'interaction, la dépendance entre l'indice et l'illumination pouvant être linéaire ou non. Sur la face avant du milieu, l'interférence de l'onde objet incidente avec l'onde de référence génère un réseau de strates d'indice, avec un taux de modulation faible, mais suffisant pour diffracter une petite fraction de l'onde de référence sur l'onde objet. En se propageant, cette onde renforcée interfère à nouveau avec l'onde de référence, ce qui génère à nouveau un réseau de strates d'indice, avec un taux de modulation un peu plus grand, d'où diffraction d'une fraction un peu plus importante de l'onde de référence sur l'onde objet, et ainsi de proche en proche. Si le réseau d'indice est déphasé exactement de $\pi/2$ par rapport au réseau de franges d'interférence, le nouveau réseau photoinduit est en phase avec le réseau principal, et le taux de modulation des strates augmente avec l'épaisseur du milieu traversée par les rayonnements. Si cette épaisseur d'interaction entre les deux faisceaux à l'intérieur du milieu est suffisante, il y a un transfert d'énergie notable de l'onde de référence sur l'onde objet. Les matériaux entrant dans cette catégorie sont par exemple les matériaux photoréfractifs tels que BSO, BGO, $KNbO_3$, $BaTiO_3$, certains milieux transparents tels que $CS_2$, Ge, ou les milieux laser tels que le RUBIS. Dans ce cas, il est avantageux d'utiliser des épaisseurs de matériaux assez importantes, de l'ordre du centimètre. Pour un fonctionnement optimal, certains matériaux peuvent être polarisés par un champ électrique appliqué entre deux faces opposées.

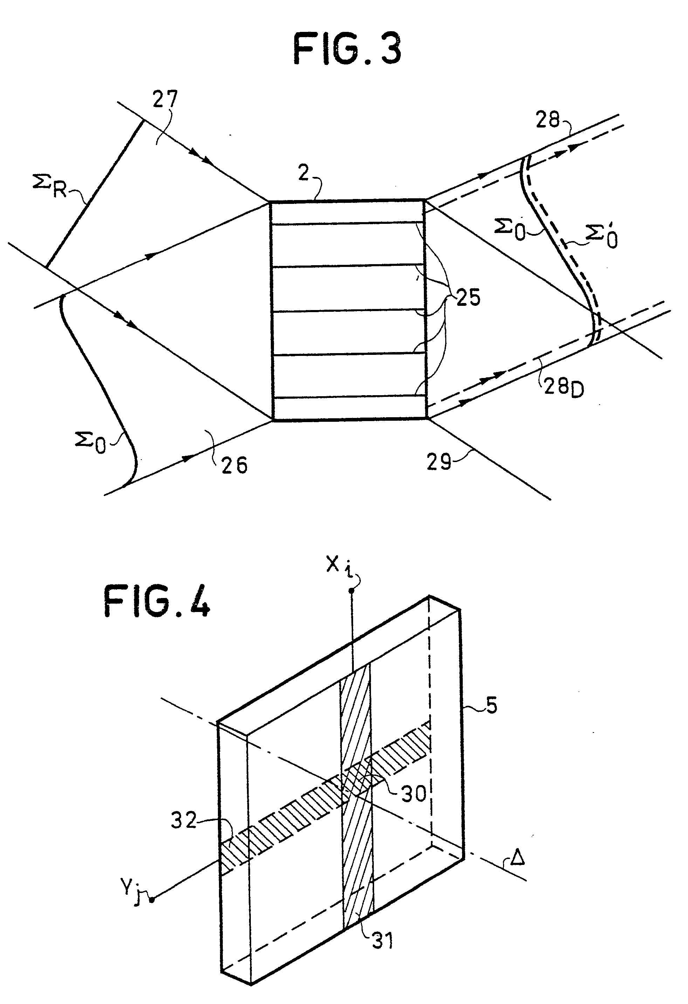

On a schématisé sur la figure 3, l'interaction d'un faisceau de référence dans un tel milieu d'interaction non linéaire. Dans ce milieu 2, interfèrent une onde objet 26 de front d'onde $\Sigma_o$ quelconque et une onde de référence 27 de front

d'onde plan $\sum_R$. Ces deux ondes 26 et 27 sont cohérentes et interfèrent dans le volume du milieu 2. Le réseau d'interférence obtenu induit, dans le milieu 2, avec une constante de temps $\tau$ caractéristique du matériau, un réseau de strates d'indice 25 qui diffracte une fraction de l'onde de référence 27 selon une onde diffractée $28_D$, exactement superposée à l'onde objet transmise 28.

Cette onde diffractée $28_D$ a un front d'onde $\sum'_o$ strictement superposé au front d'onde objet $\sum_o$, tel qu'il sort du milieu 2.

La fonction non diffractée de l'onde de référence traverse le milieu 2 et constitue l'onde de référence transmise 29, en gardant le même front d'onde plan $\sum_R$.

Le transfert d'énergie de l'onde de référence sur l'onde objet correspond à une diminution de l'intensité de l'onde de référence après traversée du milieu d'interaction. Après le temps d'inscription correspondant à l'enregistrement à saturation du réseau de strates à partir du réseau d'interférence, l'onde de référence transmise 29 en présence de l'onde objet a subi, par rapport à l'onde de référence transmise en absence de l'onde objet, une diminution d'énergie correspondant au gain sur l'onde objet transmise $28 + 28_D$ avec interaction par rapport à l'onde objet transmise 38 en absence d'interaction.

Selon les matériaux utilisés, le temps d'inscription $\tau$ varie de quelques picosecondes à quelques dizaines de millisecondes.

Dans le dispositif de l'invention, on considère deux ondes planes. $\sum_R$ est donc le front de l'onde laser dans la cavité ou onde d'oscillation, et $\sum_o$ le front d'onde signal issue du modulateur 5. Cette onde signal permet d'initialiser l'effet laser dans la direction désirée. Si on considère $S_e$ comme l'amplitude de cette onde avant le milieu 2 et $S_s$ après le milieu 2 on a les relations suivantes :

$$S_s = S_e \times \exp(\Gamma - \alpha) \quad 1$$

$\Gamma$ étant le gain par unité de longueur du milieu non linéaire 2 et 1 la longueur d'interaction dans ce milieu

$$\Gamma = 4\pi \, \Delta ns/\lambda$$

$\Delta n_s$ étant la variation d'indice photoinduite à saturation dans ce milieu, $\lambda$ la longueur d'onde incidente et $\alpha$ les pertes par absorption et diffraction dans ce milieu.

On a par exemple les valeurs suivantes pour des matériaux photoréfractifs :

$\Delta n_s \simeq 10^{-5}$
$1 = 1 \text{ cm } \Gamma = 2.5 \text{ cm}^{-1}$
$\lambda = 0.5 \, \mu m$
$\alpha \simeq 1 \text{ cm}^{-1}$
$S_s = \exp [2.5 - 1] \times S_e$
$S_s = 4.4 \times S_e$

On a alors le rendement de diffraction à saturation :

$n_s = \sin^2 (\pi \perp \Delta n_s)/\lambda$
$n_s = \sin^2 \pi/5 \simeq 30 \%$.

Sur la figure 4 on représente le modulateur 5. Le rayonnement qui atteint ce modulateur 5 permet d'illuminer de manière sensiblement uniforme une matrice de sélection. Cette matrice, à base de matériau électro-optique, par exemple, comprend $n^2$ éléments susceptibles d'être rendus opaques ou transparents sous la commande de signaux extérieurs appliqués à deux ensembles de n connexions définissant un adressage matriciel de ces $n^2$ éléments. On n'a représenté sur la figure qu'une des connexions $X_i$ et $Y_j$. Chacune de ces connexions alimente une bande conductrice transparente, verticale 31 pour les X et horizontale 32 pour les Y. En appliquant une tension égale à la moitié de la tension de commande sur une connexion X et sur une connexion Y on rend transparent le point de croisement de ces bandes, ce qui délimite sur le fond obscur de la matrice, un élément lumineux 30.

La lentille 6 représentée à la firure 1 permet d'obtenir un faisceau parallèle qui atteint le milieu 2 sous un certain angle $\Delta\theta$. Cette lentille est alignée ainsi que la matrice 5 et la source de rayonnement sur un axe $\Delta$. En sélectionnant un autre élément lumineux sur la matrice avec un autre jeu de connexions $X_i - Y_j$ on émettra un autre faisceau qui atteindra le milieu 5 sous un autre angle d'incidence.

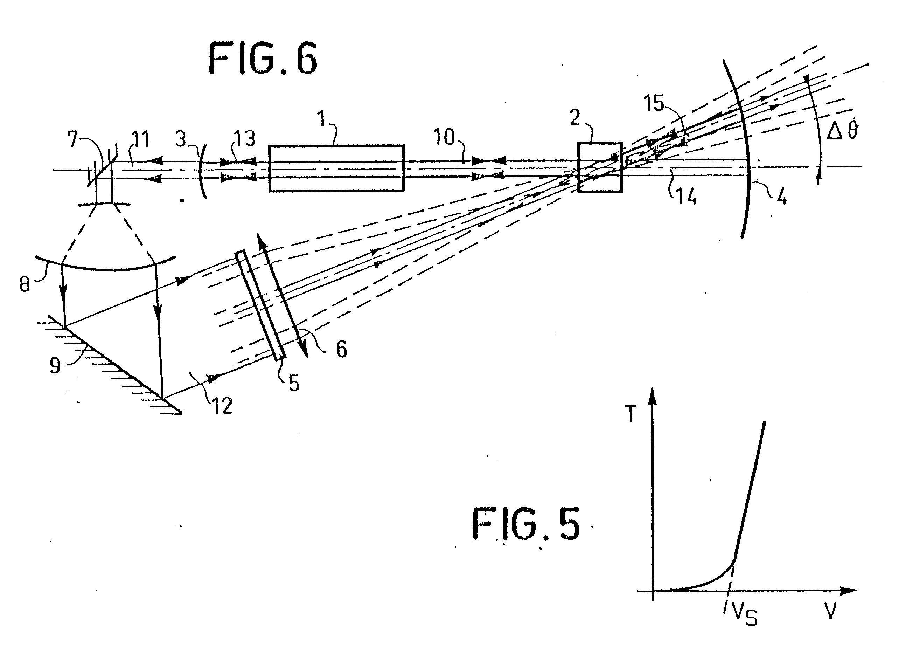

Pour un fonctionnement avec accès X-Y, le matériau électro-optique doit posséder un effet de seuil sur la courbe de transmission en fonction de la tension appliquée, comme représenté à la figure 5 par la courbe $T = f(V)$ ; $V_s$ étant la tension de seuil.

La direction de déflexion est ainsi prédéterminée par l'ouverture de la fenêtre de coordonnées X-Y sur le matériau électro-optique. Une très faible partie du flux lumineux est donc utilisée pour initialiser le réseau photoinduit dans le matériau non linéaire. L'interférence de ce faisceau avec l'onde présente dans la cavité crée un réseau d'indice dans le matériau d'interaction 2 qui possède une caractéristique $\Delta n$ en fonction de l non linéaire comme représenté à la figure 2. Un très faible taux de modulation incident sur le matériau est donc amplifié ce qui donne lieu à une diffraction de l'onde laser dans la cavité dans la direction choisie qui fait un angle $\Delta\theta$ avec l'axe optique de la cavité. Cet angle $\Delta\theta$ est fonction de l'angle d'incidence du faisceau provenant du modulateur 5 et donc de la fenêtre qui a été rendue lumineuse en appliquant des signaux de commande aux électrodes $X_i$ et $Y_j$ correspondantes.

Dans le cas illustré à la figure 6, l'onde diffractée 15 est réfléchie par le miroir 4, elle retourne dans la cavité, en subissant la diffraction sur le réseau de phase photoinduit. Selon ce processus une oscillation stable dans la cavité peut s'établir, en l'absence de l'onde signal issue de la fenêtre de coordonnées X, Y du modulateur 5. Cette onde signal n'est donc utilisée que pour initialiser l'effet laser dans la direction voulue. En effet il faut initialiser l'effet laser avec un petit signal.

On obtient ainsi une onde d'oscillation en ligne brisée (13, 10, 15) dont le point d'inflexion est situé à l'intérieur du milieu d'interaction 2. Le milieu amplificateur est un matériau laser à fort gain qui permet de compenser les pertes subies lors de la déflexion dans le milieu non linéaire.

Ce milieu est par exemple de type solide pour obtenir un gain $\Gamma$ de l'ordre de 10 cm$^{-1}$ ce peut être du Rubis ou du Néodyme.

Le réseau de strates doit être stable ce qui nécessite un auto-entretien de ces strates ; le miroir 4 doit être parfaitement sphérique pour ne pas entraîner un déplacement de ces strates.

Les miroirs 3 et 4 sont des coefficients de réflexion et de transmission R. T., tels que l'on aie une faible transmission : T de l'ordre de 1 % par exemple. On obtient donc un faisceau de sortie dans la direction désirée.

En effet, le miroir 4 étant sphérique on a la possibilité d'avoir n directions d'oscillation différentes variant angulairement par rapport au centre de courbure de ce miroir, le choix de l'axe de transmission est réalisé en sélectionnant deux électrodes $X_i$ et $Y_j$ du modulateur 5.

Ainsi dans les deux cas considérés illustrés aux figures 1 et 6, on effectue un choix de tension $V_X^1$ et $V_Y^1$ de commande du modulateur 5 bidimensionnel ; les tensions sont maintenues pendant un temps suffisant pour qu'un régime d'oscillation stable s'établisse avec la déflexion désirée dans la cavité entre les miroirs 3 et 4. Le faisceau de sortie est alors diffracté dans une direction $X_1 - Y_1$ choisie.

Dans le cas d'une onde d'oscillation en ligne droite illustré à la figure 1, on maintient l'onde signal en permanence pendant le fonctionnement pour permettre d'obtenir un faisceau de sortie défléchi sur les strates créées dans le milieu 2.

Dans le cas d'une onde d'oscillation en ligne brisée illustré à la figure 6, on peut supprimer cette onde signal après initialisation du processus, car il y a auto-entretien des strates créées dans le milieu 2.

Le passage à une autre direction nécessite d'abord l'effacement du réseau photoinduit. On peut intercaler dans la cavité un obturateur électrooptique par exemple entre le milieu amplificateur 1 et le milieu d'interaction 2, pour stopper l'onde d'oscillation dans la cavité et assurer la relaxation de la modulation d'indice.

On applique alors des tensions $X_X^2$ et $V_Y^2$ sur ce modulateur 5 bidimensionnel ; on a un positionnement du faisceau laser de sortie suivant une direction $X_2 - Y_2$.

On a considéré, jusqu'à présent, un milieu de déflexion 2 non linéaire réalisé avec un matériau électrooptique, mais on peut tout aussi bien considérer un milieu semi-conducteur dans lequel la non-linéarité induite est fonction de la densité de puissance incidente.

Le modulateur 5 en $X - Y$ peut être réalisé dans un matériau tel qu'un monocristal de bismuth silicium, mais il peut être aussi réalisé dans un matériau ferroélectrique tel que du titanate lanthanate zirconate de plomb (PLZT). Il peut aussi être composé de cristaux liquides.

Le réseau d'électrodes de commande $X_iY_j$ de la matrice qui compose ce modulateur peut être un réseau 100 × 100 ou même 600 × 600 par exemple.

Il existe diverses applications du dispositif de l'invention parmi lesquelles on peut citer : adressage et composition d'images, poursuite de cibres, désignation d'objectifs, balayage laser en accès aléatoire ou séquentiel en fonction des tensions appliquées aux électrodes du modulateur 5.

**Revendications**

1. Source cohérente de rayonnement produisant un faisceau de direction de propagation réglable comprenant d'une part une cavité laser délimitée par deux miroirs (3, 4) sphériques, une onde d'oscillation se propageant entre ces deux miroirs (3, 4) dont l'un au moins a un coefficient de transmission non nul, un milieu amplificateur (1) étant situé sur le parcours de cette onde d'oscillation, et d'autre part un milieu d'interaction (2) disposé dans la cavité entre le milieu amplificateur (1) et le second miroir (4), ledit milieu d'interaction produisant une déviation du faisceau en réponse à la modulation du signal qui lui est appliqué, caractérisé en ce que le milieu d'interaction est un milieu d'interaction non linéaire à variation d'indice photoinduite recevant une onde signal (12) sous une incidence déterminée ; ladite incidence permettant de déterminer l'orientation du faisceau, en ce que les centres de courbure de ces deux miroirs (3, 4) sont confondus et situés à l'intérieur de ce milieu d'interaction (2), et en ce que des moyens de modulation de la direction de l'onde signal (12) sont disposés sur le parcours de l'onde signal (12) pour permettre d'initialiser l'oscillation par effet laser pour une certaine orientation du faisceau.

2. Source selon la revendication 1, caractérisée en ce que l'onde signal (12) est obtenue à partir du signal transmis par le premier miroir (3).

3. Source selon la revendication 1, caractérisé en ce que l'onde d'oscillation se propage en ligne droite, le faisceau de sortie étant le faisceau défléchi par le milieu d'interaction non linéaire (2).

4. Source selon la revendication 1, caractérisée en ce que le deuxième miroir (4) a également un coefficient de transmission non nul, l'onde d'oscillation se propageant en ligne brisée, le point d'inflexion étant situé à l'intérieur du milieu d'interaction non linéaire (2), le faisceau de sortie étant obtenu par transmission à travers le second miroir (4), l'onde signal étant supprimée après initialisation de l'effet laser dans la direction voulue.

5. Source selon la revendication 1, caractérisé en ce que le milieu amplificateur (1) est un milieu solide, ce milieu étant choisi parmi les matériaux suivants : Rubis, Néodyme.

6. Source selon la revendication 1, caractérisée en ce que les moyens de modulation comprennent une matrice de sélection (5) comprenant deux ensembles orthogonaux entre eux de n électrodes définissant un adressage de $n^2$ éléments, cette matrice étant suivie d'une lentille convergente (6).

7. Source selon la revendication 6, caractérisée en ce que la matrice de sélection (5) est réalisée à base d'un matériau électro-optique, ou d'un matériau ferro-électrique, ou de cristaux liquides.

8. Source selon la revendication 1, caractérisée en ce que le milieu interactif non linéaire (2) est un matériau électro-optique.

9. Source selon la revendication 8, caractérisé en ce que ce matériau électro-optique est un monocristal de bismuth-silicium.

10. Source selon la revendication 1, caractérisée en ce que un milieu obturateur électrooptique est disposé sur le parcours de l'onde d'oscillation.

## Claims

1. Coherent radiation source producing a beam having an adjustable propagation direction, comprising, on the one hand, a laser cavity defined by two spherical mirrors (3, 4), an oscillation wave propagating between these two mirrors (3, 4) at least one of which has a non zero transmission coefficient, a first amplifier medium (1) being located on the path of this oscillation wave, and, on the other hand, an interaction medium located within the cavity between the amplifier medium (1) and the second mirror (4), said interaction medium producing a deviation of the beam in response to the modulation of the signal applied thereto, characterized in that the interaction medium is a non-linear interaction medium with photo-induced index variation and receiving a signal wave (12) at a determined incidence ; said incidence permitting to determine the orientation of the beam, in that these two mirrors (3, 4) have coincident curvature centers located inside this interaction medium (2), and in that means for the modulation of the direction of the signal wave (12) are located on the path of the signal wave (12) for permitting to initialize the oscillation by laser effect for a determined orientation of the beam.

2. Source according to claim 1, characterized in that the signal wave (12) is obtained from the signal transmitted by the first mirror (3).

3. Source according to claim 1, characterized in that the oscillation wave propagates along a straight line, the output beam being the beam deflected by the nonlinear interaction medium (2).

4. Source according to claim 1, characterized in that the second mirror (4) likewise has a non zero transmission coefficient, the oscillation wave propagating along a deflected line, the point of inflection lying inside the non-linear interaction medium (2), the output beam being obtained by transmission through the second mirror (4) the signal wave being eliminated after the initialization of the laser effect in the desired direction.

5. Source according to claim 1, characterized in that the amplifier medium (1) is a solid medium, this medium being selected among the following materials : ruby, neodymium.

6. Source according to claim 1, characterized in that the modulation means comprise a selection matrix (5) comprising two mutually perpendicular sets of n electrodes defining the addressing of $2^n$ elements, this matrix being followed by a convergent lens (6).

7. Source according to claim 6, characterized in that the selection matrix (5) is formed on the basis of an electro-optical or ferroelectric material or liquid crystals.

8. Source according to claim 1, characterized in that the non-linear interaction medium (2) is an electrooptical material.

9. Source according to claim 8, characterized in that the electro-optical material is a bismuth-silicon monocrystal.

10. Source according to claim 1, characterized in that an electro-optical shutter medium is arranged on the path of the oscillation wave.

## Patentansprüche

1. Kohärente Strahlungsquelle, die ein Bündel von einstellbarer Ausbreitungsrichtung erzeugt, einerseits mit einem Laserresonator, der durch zwei sphärische Spiegel (3, 4) begrenzt ist, wobei eine Schwingungswelle sich zwischen diesen zwei Spiegeln (3, 4) ausbreitet, wovon wenigstens einer einen von Null verschiedenen Transmissionskoeffizienten aufweist, und wobei ein verstärkendes Medium (1) auf dem Weg dieser Schwingungswelle angeordnet ist, und andererseits mit einem Wechselwirkungsmedium (2), welches in dem Resonator zwischen dem verstärkenden Medium (1) und dem zweiten Spiegel (4) angeordnet ist, wobei das genannte Wechselwirkungsmedium eine Ablenkung des Bündels, ansprechend auf die Modulation des daran angelegten Signals erzeugt, dadurch gekennzeichnet, daß das Wechselwirkungsmedium ein nicht lineares Wechselwirkungsmedium mit photoinduzierter Indexänderung ist, welches eine Signalwelle (12) unter einem bestimmten Einfallswinkel empfängt, wobei dieser Einfallswinkel die Bestimmung der Orientierung des Bündels gestattet, daß die Krümmungszentren der zwei Spiegel (3, 4) zusammenfallen und im Inneren dieses Wechselwirkungsmediums (2) liegen und daß die Mittel zur Modulation der Richtung der Signalwelle (12) auf dem Weg der Signalwelle (12) angeordnet sind, um das Anschwingen durch Lasereffekt für eine bestimmte Orientierung des Bündels zu gestatten.

2. Quelle nach Anspruch 1, dadurch gekennzeichnet, daß die Signalwelle (12) aus dem Signal erhalten wird, welches der erste Spiegel (3) durchläßt.

3. Quelle nach Anspruch 1, dadurch gekennzeichnet, daß die Schwingungswelle sich geradlinig ausbreitet, wobei das Austrittsbündel, das durch nichtlineare Wechselwirkungsmedium (2) abgelenkte Bündel ist.

4. Quelle nach Anspruch 1, dadurch gekennzeichnet, daß der zweite Spiegel (4) ebenfalls einen von Null verschiedenen Transmissionskoeffizienten aufweist, die Schwingungswelle sich in einer abgewinkelten Linie ausbreitet, wobei der Umlenkpunkt im Inneren des nichtlinearen Wechselwirkungsmediums (2) liegt, das Austrittsbündel durch Transmission durch den zweiten Spiegel (4) hindurch erhalten wird und die Signalwelle unterdrückt wird, nachdem der Lasereffekt in der gewünschten Richtung eingeleitet wurde.

5. Quelle nach Anspruch 1, dadurch gekennzeichnet, daß das verstärkende Medium (1) ein Festkörpermedium ist, wobei dieses Medium unter folgenden Materialien ausgewählt ist : Rubin, Neodym.

6. Quelle nach Anspruch 1, dadurch gekennzeichnet, daß die Modulationsmittel eine Selektionsmatrix (5) umfassen, welche zwei zueinander senkrechte Gruppen von n Elektroden umfaßt, welche eine Adressierung von $n^2$ Elementen bestimmen, wobei auf diese Matrix eine Konvergenzlinse (6) folgt.

7. Quelle nach Anspruch 6, dadurch gekennzeichnet, daß die Selektionsmatrix (5) auf der Grundlage eines elektrooptischen Materials, eines ferroelektrischen Materials oder von Flüssigkristallen verwirklicht ist.

8. Quelle nach Anspruch 1, dadurch gekennzeichnet, daß das nichtlineare Wechselwirkungsmedium (2) ein elektrooptisches Material ist.

9. Quelle nach Anspruch 8, dadurch gekennzeichnet, daß dieses elektrooptische Material ein Einkristall aus Wismuth-Silizium ist.

10. Quelle nach Anspruch 1, dadurch gekennzeichnet, daß ein elektrooptisches Verschlußmedium auf dem Weg der Schwingungswelle angeordnet ist.

FIG.1

FIG.2

# FIG. 3

# FIG. 4

# FIG.6

# FIG.5